# EUROPÄISCHE PATENTSCHRIFT

(11) **EP 0 569 364 B1**
(45) Veröffentlichungstag und Bekanntmachung des Hinweises auf die Patenterteilung: **04.09.1996**
(21) Anmeldenummer: 92900164.2
(22) Anmeldetag: 05.12.1991
(51) Int. Cl.: H04L 12/40, H04B 3/54

(54) **BUSANKOPPLER**
BUS COUPLER
COUPLEUR DE BUS

(30) Priorität: 29.01.1991 EP 91101162
(43) Veröffentlichungstag der Anmeldung: 18.11.1993
(73) Patentinhaber: SIEMENS AKTIENGESELLSCHAFT, 80333 München (DE)
(72) Erfinder: ZIERHUT, Hermann, D-8401 Neutraubling (DE)
(86) Internationale Anmeldenummer: EP9102331
(87) Internationale Veröffentlichungsnummer: WO9213411

(56) Entgegenhaltungen:
- EP-A- 0 337 762
- EP-A- 0 379 902

## Beschreibung

Die Erfindung bezieht sich auf einen Busankoppler, der mit einem Übertrager und einem im Signalverarbeitungszweig nachgeschalteten Komparator arbeitet.

Ein derartiger Busankoppler ist bekannt (FR-A-2 443 770, FIG 1). Der Busankoppler des Komparators arbeitet dort mit einer statisch eingestellten Schwelle. Dieses Datenbussystem arbeitet mit einem Abschlußwiderstand am Ende jeder Busleitung.

Bei Datenbussystemen ist es bekannt, auf einem Busleiter sowohl Daten- bzw. Informationssignale als auch die Versorgungsspannung zu führen. Ein derartiges System ist aus EP-A-0 365 696 bekannt. Dabei wird der Busleiter von einer Spannungsversorgung mit einer gegen Erde symmetrischen Gleichspannung versorgt. An dem Busleiter können mehrere Teilnehmer angeschlossen werden, die sowohl die Versorgungsspannung abgreifen als auch ein Informationssignal. Informationssignale können auch auf den Bus gesendet werden. Zur Trennung empfangener Informationssignale oder zum Abgeben von Informationssignalen auf den Bus dient ein Übertrager mit Kondensator. Bei einem derartigen induktiven Busankoppler trennt der Kondensator die Potentiale der Energieversorgung für das Bordnetz und schließt den Signalpfad durch die busseitige Wicklung des Übertragers. Das System arbeitet ohne Abschlußwiderstand am Ende der Busleitung.

Für die Übertragung der Bit-Impulse soll die Induktivität L möglichst groß sein, da die Belastung eines auf dem Bus arbeitenden Senders aus sehr vielen parallel geschalteten Stationen mit ihrem Busankoppler besteht. Zugleich soll der Belastungswiderstand in seiner Summe möglichst klein sein, so daß die Magnetisierungsstromspitze nicht zu groß wird. Bei der Verwendung eines Komparators im Signalverarbeitungszweig eines Busankopplers sollen andererseits relativ starke Signale, wie sie von nahen auf den Bus arbeitenden Sendern empfangen werden, sowie auch starke Störsignale gedämpft bzw. unterdrückt werden.

Der Erfindung liegt die Aufgabe zugrunde, einen Busankoppler zu entwickeln, der relativ starke Signale stärker dämpft als schwache Signale.

Die Lösung der geschilderten Aufgabe erfolgt durch einen Busankoppler nach Patentanspruch 1. Danach wird die Komparatorschwelle signalabhängig bei großen Signalen relativ zu kleinen Signalen angehoben. Hierzu eignet sich ein dem Komparatoreingang in Reihe vorgeschalteter Kondensator und ein zum Komparator paralleler Widerstandszweig. Bei einem am Kondensator empfangenen positiven Signal wird auf seiner anderen Seite ein entsprechend negatives Signal dem Komparatoreingang zugeführt, so daß erst ein vergleichsweise größerer positiver Impuls den alten Signalzustand am Ausgang des Komparators wieder herstellen könnte. Mit anderen Worten: der Schwellenwert des Komparators wird angehoben, wodurch bei starken Impulsen eine größere Dämpfungswirkung erzielt wird.

Einer Weiterbildung der Erfindung liegt die weitere Aufgabe zugrunde, die Abmagnetisierung des Übertragers durch Ausgleichsimpulse zu fördern, wie es aus EP-A-0 379 902 an sich bekannt ist, jedoch hierbei sicherzustellen, daß die Abmagnetisierung möglichst wenig bedämpft erfolgen kann. Die Lösung dieser weiteren Aufgabe erfolgt durch einen Busankoppler nach Patentanspruch 2. Hierdurch wird gegensätzlichen Forderungen genügt:

Hiernach wird wie eingangs geschildert die Induktivität des Übertragers groß gehalten und andererseits der Widerstand im Widerstandszweig klein. Weiter wird die Abmagnetisierung während des dem Informationssignal folgenden Ausgangssignals zum Abmagnetisieren des Übertragers eine um die Kapazität verringerte Induktivität bei größerem Widerstand im Widerstandszweig bereitgestellt. Dieser vergrößerte Widerstand wird durch den gesperrten Ventilweg mit dem jetzt nicht überbrückten Widerstand gewonnen.

Dennoch wird weiterhin wie eingangs geschildert ein großes Eingangssignal bei Sicht vom Ausgang des Komparators gedämpft, so daß die überhöhten Signale von nahen Sendern auf gewünschte Werte zurückgeführt werden können und Störsignale, insbesondere als Folge von Ausgleichsimpulsen zur Entmagnetisierung des Übertrager heruntergedämpft werden.

Die Zeitkonstante Tau als Produkt aus Widerstand und Kapazität ist für den Ausgleichsimpuls entsprechend größer als für die BIT-Folge eines Informationssignals, so daß die Ausgleichs; schwingungen entsprechend wenig bedämpft werden. Bei einem Busankoppler nach Anspruch 3 erreicht man für zunehmend stärkere Signale eine zunehmend stärkere Verminderung durch entsprechende Anhebung des Schwellenwerts des Komparators. Insbesondere können so auch logarithmische Kennlinien erzielt werden.

Bei einer einfachen Ausführung nach Patentanspruch 4 oder 5 werden in der Praxis besonders günstige Verhältnisse erzielt.

Die Erfindung soll nun anhand von in der Zeichnung grob schematisch wiedergegebenen Ausführungsbeispielen näher erläutert werden:

In FIG 1 ist ein Busankoppler veranschaulicht.

In FIG 2 ist ein Diagramm der Spannung über der Zeit bei einem Übertrager und Operationsverstärker ohne erfindungsgemäße Maßnahmen wiedergegeben, wobei die untere Kurve die Verhältnisse nach dem Übertrager und die obere Kurve den Verlauf am Ausgang des Komparators darstellt.

In FIG 3 ist ein Diagramm der Spannung bzw. des Stromes über der Zeit für den Signalverarbeitungszweig mit erfindungsgemäßen Maßnahmen dargestellt, wobei in der oberen Kurve eine Spannung zum Ansteuern des Komparators veranschaulicht ist und in der unteren Kurve der Strom für ein langes Informationswort am Ausgang des Komparators wiedergegeben ist.

In FIG 4 ist ein Diagramm der Spannung über der Zeit im Signalverarbeitungszweig bei erfindungsgemäßer Aussteuerung des Komparators und einem besonderen Widerstandszweig für Ausgleichsimpulse zur Entmagnetisierung des Übertragers wiedergegeben, wobei U1 die Spannung hinter dem Übertrager und U2 die Spannung zwischen Übertrager und einer diesem vorgeschalteten erfindungsgemäßen Schaltungsgruppe veranschaulicht.

In FIG 5 ist ein Ausführungsbeispiel für die dem Komparator vorgeordnete Schaltungsgruppe zwischen diesem und dem Wandler wiedergegeben.

In FIG 6 ist ein weiteres Ausführungsbeispiel für die Schaltungsgruppe nach Figur 5 wiedergegeben.

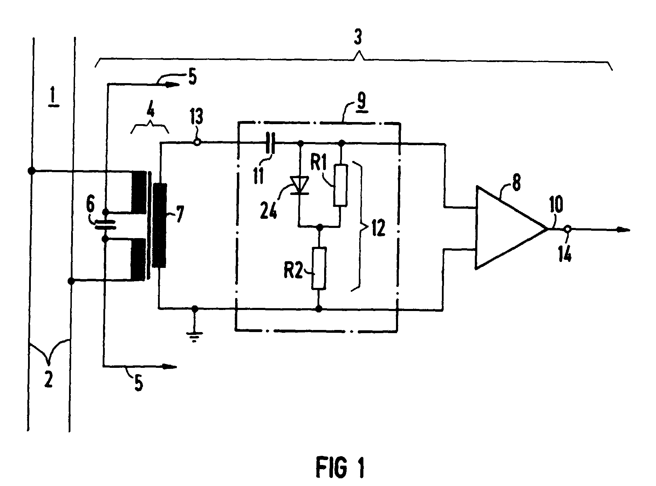

In Figur 1 ist an einem Bus 1 mit den Leitern 2 ein Busankoppler 3 mittels eines Übertragers 4 induktiv angeschlossen. Die Busleiter 2 führen Gleichspannung für die Bordnetzversorgung von Busankopplern und Wechselspannung für die Signalverarbeitung. Die Gleichspannung für das Bordnetz des Busankopplers 3 wird über Bordnetzleitungen 5 abgenommen. Ein Koppelkondensator 6 schließt zwischen den beiden Primärwicklungen des Übertragers 4 einen Durchgangspfad für Wechselspannungssignale für die Signalverarbeitung. An der Sekundärwicklung 7 des Übertragers 4 ist ein Komparator 8 angeschlossen. Auf seiner Eingangsseite ist nach Figur 1 eine Schaltungsanordnung 9 vorgeordnet. Die Ausgangseite 10 des Komparators 8 führt die aufbereiteten Signale des Signalverarbeitungszweigs einer weiteren Auswertung zu. Erfindungsgemäß ist der Komparator 8 so betrieben, daß seine Komparatorschwelle signalabhängig bei größeren Signalen relativ zu kleineren Signalen angehoben wird. Hierfür genügt ein geeignet bemessener Kondensator 11 in der Schaltungsanordnung 9, die allgemein als Vierpol verstanden werden kann, wobei dem Komparatoreingang der Kondensator 11 in Reihe vorgeschaltet ist.

Um vorteilhaft mit Ausgleichsimpulsen zur Entmagnetisierung des Übertragers zu arbeiten, ist im Ausführungsbeispiel nach Figur 1 in der Schaltungsanordnung 9 weiter dem Eingang des Komparators 9 parallel ein Widerstandszweig 12 vorgeschaltet. Ein derartiger Widerstandszweig begünstigt auch die Entladung des Kondensators 11.

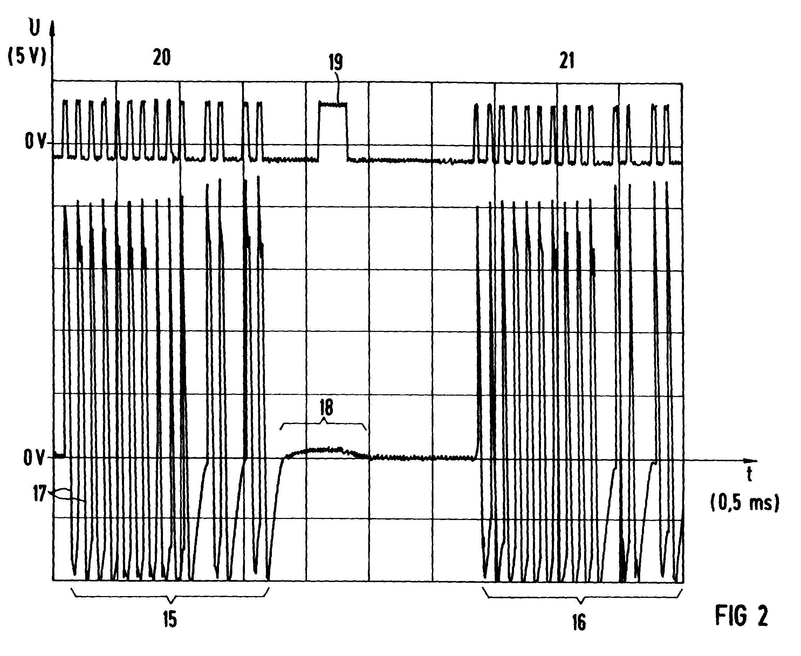

An der Meßstelle 13 hinter dem Übertrager kann die untere Kurve im Diagramm nach Figur 2 gemessen werden. Man stellt fest, daß zwischen zwei Informationswerten 15 und 16 aus Folgen von Einzelbits 17 eine Induktionsspannung 18 auftritt. Die Induktionsspannung 18 geht auf Ausgleichsimpulse infolge von Abmagnetisierungsvorgängen im Übertrager 4 zurück und wird insbesondere durch Umladungen am Koppelkondensator 6 verstärkt. An der Meßstelle 14 am Ausgang des Komparators 8, nach Figur 1, ohne die Schaltungsanordnung 9 wird bei fehlender Schaltungsanordnung 9 und ohne besondere Aussteuerung des Komparators 8 bei einem Spannungsverlauf nach der unteren Kurve in Figur 2 dann ein Spannungsverlauf nach der oberen Kurve nach Figur 2 erzeugt. Ohne besondere Vorkehrungen wird die Induktionsspannung 18 dann zu einem falschen Impuls 19 verstärkt, der in der Größenordnung der Informationssignale bzw. Informationswerter 20 und 21 liegt.

Im Diagramm nach Figur 2 ist auf der Ordinate die Zeit t mit der Einheit von 0,5 ms und auf der Ordinate die Spannung U mit der Einheit von 5 V abgetragen.

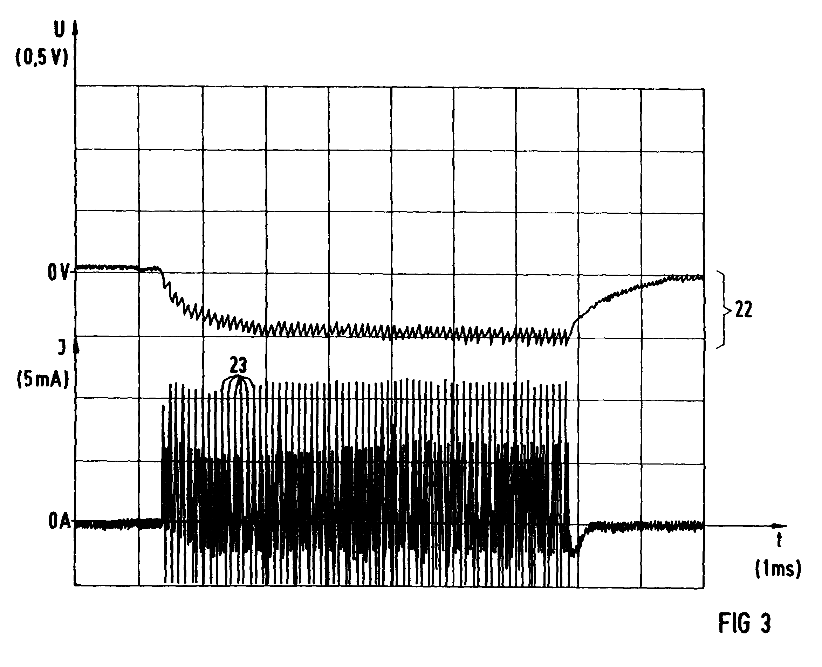

In Figur 3 ist eine erfindungsgemäße Aussteuerung des Komparators bei signalabhängig ausgesteuerter Komparatorschwelle veranschaulicht. Auf der Abszisse ist die Zeit mit der Einheit von 1 ms und auf der Ordinate die Spannung U mit der Einheit 0,5 V abgetragen. Die obere Kurve zeigt den Verlauf der Spannung 22 am Aussteuerkondensator 11. Die untere Kurve zeigt den entsprechenden Stromverlauf bei einer Einheit von 5 mA. Dargestellt ist ein langes Wort mit einer Folge einzelner Bit 23. Die Spannung 22 gibt das Ausmaß der Verlegung der Komparatorschwelle wieder. Relativ hohe Signale werden dadurch schwächer vom Komparator verstärkt und relativ schwache Signale ungestört verstärkt.

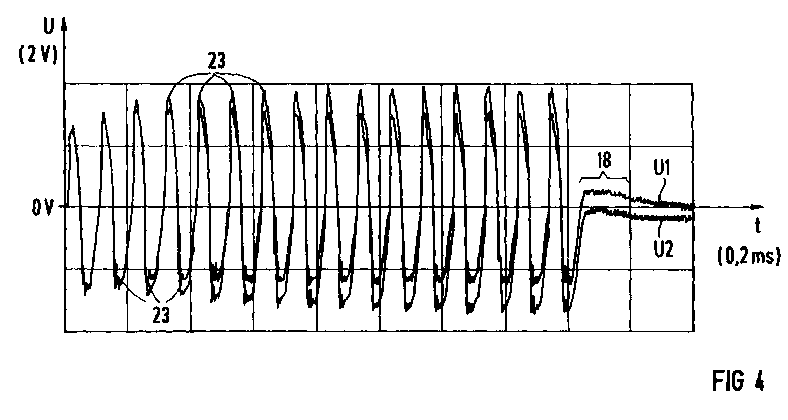

Im Diagramm nach Figur 4 sind die Spannung U1 an der Meßstelle 13 des Signalverarbeitungszweigs nach Figur 1 und U2 zwischen der dem Komparator 8 vorgeordneten Schaltungsanordnung 9 und dem Komparator wiedergegeben. Die Schaltungsanordnung 9 weist einen dem Eingang des Komparators 9 in Reihe vorgeschalteten Kondensator 11 und einen parallelen Widerstandszweig 12 auf, wobei der Widerstandszweig durch ein Ventil 24 oder durch mehrere Ventile teilweise überbrückt ist. Das Ventil weist eine solche Polarität auf, daß für den Arbeitsimpuls der Ventilweg geöffnet ist und für den Ausgleichsimpuls unterbrochen ist. Die Ausgleichsimpulse zur Entmagnetisierung der Wandlerspulen des Übertragers 4 werden hierbei gezielt gefördert, aber in ihrer Signalwirkung hinter dem Komparator gedämpft bzw. ausgeschaltet. Da die Spannung U2 hinter der Schaltungsanordnung 9 bzw. dem Vierpol, die Nullinie nicht überschreitet, tritt hinter dem Komparator zu den Ausgleichsimpulsen 18 in der Spannung U1 in der Spannung U2 kein Signal mehr auf. Vor der Induktionsspannung 18 zeigen die Spannungen U1 und U2 eine Folge einzelner Bit 23, die Teil eines gesamten Informationswortes sind.

Die Schaltungsanordnung 9 nach Figur 1 ist im wiedergegebenen Ausführungsbeispiel so ausgeführt, daß der Widerstandszweig 12 durch ein Ventil 24 solcher Polarität hinsichtlich R1 überbrückt ist, daß für den Arbeitsimpuls der Ventilweg geöffnet ist und für den Ausgleichsimpuls unterbrochen ist. Für den Arbeitsimpuls ist die Zeitkonstante Tau dann das Produkt aus der Kapazität des Aussteuerkondensators 11 und dem Widerstand R2. Für den Ausgleichsimpuls ist die Zeitkonstante Tau dann das Produkt aus der Kapazität des Aussteuerkondensators C1 mit der Summe der Widerstände R1 und R2. Der großen Zeitkonstanten für den Ausgleichsimpuls entspricht eine geringe Dämpfung, der kleinen Zeitkonstanten für den Arbeitsimpuls eine entsprechend große Dämpfung. Den Ausgleichsimpulsen wird also eine lange Zeitdauer gegeben, aber ihr Einfluß auf die Signalbildung hinter dem Komparator unterdrückt oder ausgeschaltet. Wenn das Ventil 24 eine solche Ansprechspannung aufweist, daß für als klein definierte Signale das Ventil gesperrt ist, werden derartig kleine Signale wenig bedämpft.

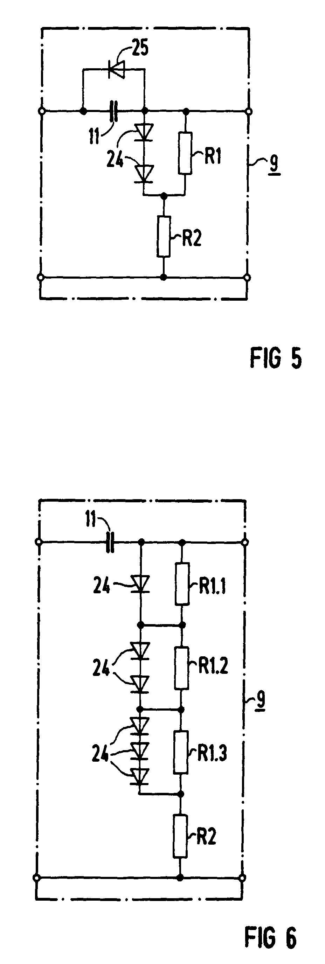

Im Ausführungsbeispiel der Schaltunganordnung 9 nach Figur 5 ist dem Aussteuerkondensator 11 eine Begrenzungsdiode 25 im Pfad des Arbeitsimpulses bereitgestellt, die die Aussteuerung des Regelhubes des Komparators 8 definiert begrenzt. Unabhängig von der Begrenzungsdiode ist im Ausführungsbeispiel nach Figur 5 weiter der Widerstand R1 durch zwei Ventile 24 überbrückt, so daß bei gleichartigen Ventilen zudem in Figur 1 die doppelte Anprechspannung erzielt wird. Der Widerstand R1 wird dann erst bei dieser höheren Spannung überbrückt. Bei Ausführungsbeispiel nach Figur 6 sind die Widerstände Rl.l, R1.2 und R1.3 durch eine steigende Anzahl von Ventilen 24 überbrückt. Rl.l durch ein Ventil 24, R1.2 durch zwei Ventile 24 und R1.3 durch drei Ventile 24. Verständlicherweise können auch entsprechende Bauelemente mit der entsprechend höheren Ansprechspannung anstelle von mehreren Ventilen eingesetzt werden. Bei zwei oder mehreren überbrückten Widerständen sind diese dann jeweils durch Ventile mit in Anreihrichtung steigender vorgegebener Schwellwertspannung in Durchlaßrichtung überbrückt, so daß sich logarithmische oder andere gewünschte Regelkurven erhalten lassen.

Für ein einfaches Ausführungsbeispiel der Schaltungsanordnung 9 nach Figur 1 sind vorteilhafte Wertebereiche zur Optimierung der Förderung von Ausgleichsvorgängen zum Abmagnetisieren und zum Unterdrücken von Störsignalen sowie von benachbarten starken Sendesignalen folgende Wertebereiche günstig:

Das Verhältnis der Widerstände R2:R1 liegt im Bereich von 1:2 bis 1:4.

Die Entladezeitkonstante C11 × (R1 + R2) liegt in der Größenordnung von 10 bis 20 mal der Zeitkonstanten eines Bit des Signalverarbeitungszweigs.

## Patentansprüche

1. Busankoppler, der mit einem Übertrager (4) und einem im Signalverarbeitungszweig nachgeschalteten Komparator (8) arbeitet, **dadurch gekennzeichnet,** daß eine Eingangsbeschaltung zur Anhebung der Komparatorschwelle signalabhängig bei größeren Signalen relativ zu kleinen Signalen vorgesehen ist, indem dem Eingang des Komparators (8) in Reihe ein Aussteuerkondensator (11) vorgeschaltet ist und parallel ein Widerstandszweig (12).

2. Busankoppler nach Anspruch 1,
**dadurch gekennzeichnet**, daß mit Arbeitsimpulsen für Signalverarbeitung und mit Ausgleichsimpulsen zur Entmagnetisierung des Übertragers (4) gearbeitet wird, wobei der Widerstandszweig (12) durch ein Ventil (24) oder mehrere Ventile (24) solcher Polarität teilweise überbrückt ist, daß für den Arbeitsimpuls der Ventilweg geöffnet ist und für den Ausgleichsimpuls unterbrochen ist, und wobei das Ventil bzw. die Ventile (24) eine solche Ansprechspannung aufweisen, daß für als klein definierte Signale das Ventil bzw. die Ventile (24) gesperrt ist bzw. sind.

3. Busankoppler nach Anspruch 2,
**dadurch gekennzeichnet,** daß von zwei oder mehreren überbrückten Widerständen R1, R1.1, R1.2, R1.3 diese jeweils durch Ventile (24) mit in Anreihrichtung steigender vorgegebener Schwellwertspannung in Durchlaßrichtung überbrückt sind.

4. Busankoppler nach Anspruch 2 oder 3,
**dadurch gekennzeichnet,** daß bei zwei Widerständen R1, R2 von denen R1 überbrückt ist, das Verhältnis der Widerstände R2:R1 im Bereich von 1:2 bis 1:4 liegt.

5. Busankoppler nach Anspruch 4,
**dadurch gekennzeichnet,** daß die Entladezeitkonstante (C × R1 + R2) in der Größenordnung von 10 bis 20 mal der Zeitkonstante von einem Bit des Signalverarbeitungszweiges gewählt ist.

6. Busankoppler nach einem der Anspüche 1 bis 5,
**dadurch gekennzeichnet,** daß der in Reihe zum Eingang des Komparators (8) angeordnete Aussteuerkondensator (11) durch ein Ventil (25) mit Schwellwert, insbesondere durch eine Diode (Begrenzungsdiode) überbrückt ist.

## Claims

1. Bus coupler which operates with a transformer (4) and a comparator (8) which is connected downstream thereof in the signal-processing branch, characterised in that an input circuit element is provided for the purpose of raising the comparator threshold in a signal-dependent manner in the case of comparatively large signals relative to small signals, by connecting a modulation capacitor (11) upstream of the input of the comparator (8) in series therewith and by connecting a resistance branch (12) in parallel therewith.

2. Bus coupler according to claim 1,
characterised in that operations are carried out with working pulses for signal-processing and with equalizing pulses for demagnetization of the transformer (4), wherein the resistance branch (12) is bridged in part by one valve (24) or a plurality of valves (24) of such polarity that the valve path is opened for the working pulse and is interrupted for the equalizing pulse and wherein the valve or the valves (24) have such a response voltage that the valve or the valves (24) is or are blocked for signals which are defined as small.

3. Bus coupler according to claim 2,
characterised in that of two or more bridged resistors R1, R1.1, R1.2, R1.3 the latter are bridged in the forward direction by respective valves (24) with a given threshold value voltage rising in the series line-up direction.

4. Bus coupler according to claim 2 or 3,
characterised in that in the case of two resistors R1, R2, of which R1 is bridged, the ratio of the resistors R2:R1 lies in the range of 1:2 to 1:4.

5. Bus coupler according to claim 4,
characterised in that the chosen discharge time constant (C x R1 + R2) is in the order of magnitude of 10 to 20 times the time constant of one bit of the signal-processing branch.

6. Bus coupler according to one of the claims 1 to 5, characterised in that the modulation capacitor (11), which is arranged in series with the input of the comparator (8), is bridged by a valve (25) with a threshold value, in particular by means of a diode (limiting diode).

## Revendications

1. Coupleur de bus, qui fonctionne avec un transformateur (4) et un comparateur (8) branché en aval dans la branche de traitement de signaux, caractérisé en ce qu'un circuit d'entrée destiné à élever le seuil du comparateur est prévu en fonction d'un signal pour des signaux plus grands que de petits signaux, par le fait qu'il est branché en amont de l'entrée du comparateur (8) et en série un condensateur (11) de modulation et en parallèle une branche (12) de résistance.

2. Coupleur de bus suivant la revendication 1,
caractérisé en ce qu'il fonctionne avec des impulsions de travail pour le traitement d'un signal et avec des impulsions de compensation pour la démagnétisation du transformateur (4), la branche (12) de résistance étant partiellement pontée par une valve (24) ou par plusieurs valves (24) d'une polarité telle que la voie de valve est ouverte pour l'impulsion de travail et est interrompue pour l'impulsion de comparaison, la valve ou les valves (24) ayant une tension de réponse telle que pour des signaux définis comme petits la valve ou les valves (24) est ou sont bloquées.

3. Coupleur de bus suivant la revendication 2,
caractérisé en ce que parmi deux ou plusieurs résistances pontées R1, R1.1, R1.2, R1.3 celles-ci sont chacune pontées par des valves (24) ayant une tension de seuil, dans le sens passant, prescrite croissant en fonction de la mise en série des résistances.

4. Coupleur de bus suivant la revendication 2 ou 3,
caractérisé que pour deux résistances R1, R2 dont l'une R1 est pontée, le rapport des résistances R2:R1 est dans le domaine compris entre 1:2 et 1:4.

5. Coupleur de bus suivant la revendication 4,
caractérisé en ce que la constante de temps de décharge (C × R1 + R2) est choisie de l'ordre de grandeur de 10 à 20 fois la constante de temps d'un bit de la branche de traitement de signal.

6. Coupleur de bus suivant l'une des revendications 1 à 5,
caractérisé en ce que le condensateur (11) de modulation disposé en série avec l'entrée du comparateur (8) est ponté par une valve (25) à seuil, notamment par une diode (diode de limitation).
